# EUROPEAN PATENT APPLICATION

(11) **EP 4 631 694 A1**
(43) Date of publication of application: **15.10.2025**
(21) Application number: 23900293.4
(22) Date of filing: 02.10.2023
(51) Int. Cl.: B29C 45/76

(54) **AUTOMATIC EVALUATION DEVICE, AUTOMATIC EVALUATION METHOD, AND COMPUTER PROGRAM**

(30) Priority: 08.12.2022 JP 2022196505
(71) Applicant: The Japan Steel Works, Ltd., Tokyo 141-0032 (JP)
(72) Inventor: YOKOTA, Takumi, Tokyo 141-0032 (JP); SAEKI, Akihiko, Tokyo 141-0032 (JP); AKAGI, Takashi, Tokyo 141-0032 (JP)
(74) Representative: Simmons & Simmons LLP (Munich)
(86) International application number: PCT/JP2023/035856
(87) International publication number: WO 2024/122169

(57) **Abstract**

According to the present invention, an automatic evaluation device for a trained model that corrects operating conditions of an industrial machine comprises: a reception unit that receives a plurality of defect-inducing conditions that induce an operation which generates a defective product; and a processing unit. The processing unit generates a plurality of defect conditions on the basis of the plurality of defect-inducing conditions received by the reception unit, sets the generated defect conditions in the industrial machine, in a case where the industrial machine in which the defect conditions are set is operated, acquires the operating results when the operating conditions are corrected by the trained model, sets each of the plurality of defect conditions in the industrial machine, and generates an evaluation report of the trained model on the basis of the operation results obtained by operating the industrial machine a plurality of times for each defect condition.

## Description

### Technical Field

The present invention relates to an automatic evaluation device, an automatic evaluation method and a computer program for a trained model.

### Background Art

In the case of performing injection molding using an injection molding machine, it is necessary that a condition setting work be first performed for modifying setting values of items for various molding conditions to obtain molding conditions. The modification of molding conditions is performed based on the operator's experience and requires repeated trial and error to obtain appropriate molding conditions. Patent Literature 1 discloses an injection molding machine system for modifying molding conditions of an injection molding machine using reinforcement learning.

### Citation List

### Patent Literature

Patent Literature 1: Japanese Patent Application Laid-Open Publication No. 2019-166702

### Summary of Invention

### Technical Problems

Performance evaluation of a trained model generated by reinforcement learning and other machine learning is conducted by setting preset defect molding conditions decided by a person and recording the number of shots when a defective product becomes a favorable product or how many times a favorable product can be retained in the decided number of shots. The performance evaluation of the trained model is performed manually and needs much time. Similar problem also occurs for the performance evaluation of trained models that modify the operating conditions of industrial machines.

The purpose of this disclosure is to provide an automatic evaluation device, an automatic evaluation method and a computer program that can automatically conduct the performance evaluation of a trained model that modifies the operating conditions of industrial machines by simply configuring settings that induce a defective product occurrence behavior of the industrial machines.

### Solution to Problems

An automatic evaluation device according to one aspect of the present disclosure is an automatic evaluation device for a trained model modifying an operating condition of an industrial machine, and comprises: a reception unit that receives a plurality of defect inducing conditions inducing a defective product occurrence behavior; and a processing unit, and the processing unit generates a plurality of defective conditions based on the plurality of defect inducing conditions received by the reception unit, setts the generated defective conditions to the industrial machine, acquires an operation result obtained when the operating condition is modified by the trained model in a case where the industrial machine to which the defective conditions are set is operated, and generates an evaluation report of the trained model based on operation results obtained by setting each of the plurality of defective conditions to the industrial machine and operating the industrial machine a plurality of times for each of the defective conditions.

An automatic evaluation method according to one aspect of the present disclosure is an automatic evaluation method for a trained model modifying an operating condition of an industrial machine, and comprises: receiving a plurality of defect inducing conditions inducing a defective product occurrence behavior; generating a plurality of defective conditions based on the received plurality of defect inducing conditions; setting the generated defective conditions to the industrial machine; acquiring an operation result obtained when the operating condition is modified by the trained model in a case where the industrial machine to which the defective conditions are set is operated; and generating an evaluation report of the trained model based on operation results obtained by setting each of the plurality of defective conditions to the industrial machine and operating the industrial machine a plurality of times for each of the defective conditions.

A computer program (program product) according to one aspect of the present disclosure is a computer program causing a computer to evaluate a trained model modifying an operating condition of an industrial machine, and comprises: receiving a plurality of defect inducing conditions inducing a defective product occurrence behavior; generating a plurality of defective conditions based on the received plurality of defect inducing conditions; setting the generated defective conditions to the industrial machine; acquiring an operation result obtained when the operating condition is modified by the trained model in a case where the industrial machine to which the defective conditions are set is operated; and generating an evaluation report of the trained model based on operation results obtained by setting each of the plurality of defective conditions to the industrial machine and operating the industrial machine a plurality of times for each of the defective conditions. Advantageous Effects of Invention

According to the present invention, it is possible to automatically conduct the performance evaluation of a trained model that modifies the operating conditions of an industrial machine by merely making settings that induce a defective product occurrence behavior of the industrial machine.

### Brief Description of Drawings

FIG. 1 is a schematic view depicting an example of the configuration of an injection molding machine according to a present embodiment.
FIG. 2 is a block diagram depicting an example of the configuration of a control device according to the present embodiment.
FIG. 3 is a block diagram depicting an example of the configuration of an automatic evaluation device according to the present embodiment.
FIG. 4 is a flowchart depicting a processing procedure of an automatic evaluation method according to the present embodiment.
FIG. 5 is the flowchart depicting a processing procedure of the automatic evaluation method according to the present embodiment.
FIG. 6 is a schematic view depicting an example of an evaluation report according to the present embodiment.

### Description of Embodiments

Specific examples of an automatic evaluation device, an automatic evaluation method and a computer program according to an embodiment of the present invention will be described below with reference to the drawings.
At least parts of the following embodiments may arbitrarily be combined. It should be noted that the present invention is not limited to these examples, and is indicated by the scope of claims, and is intended to include all modifications within the meaning and scope equivalent to the scope of claims.

### <Configuration of Injection Molding Machine>

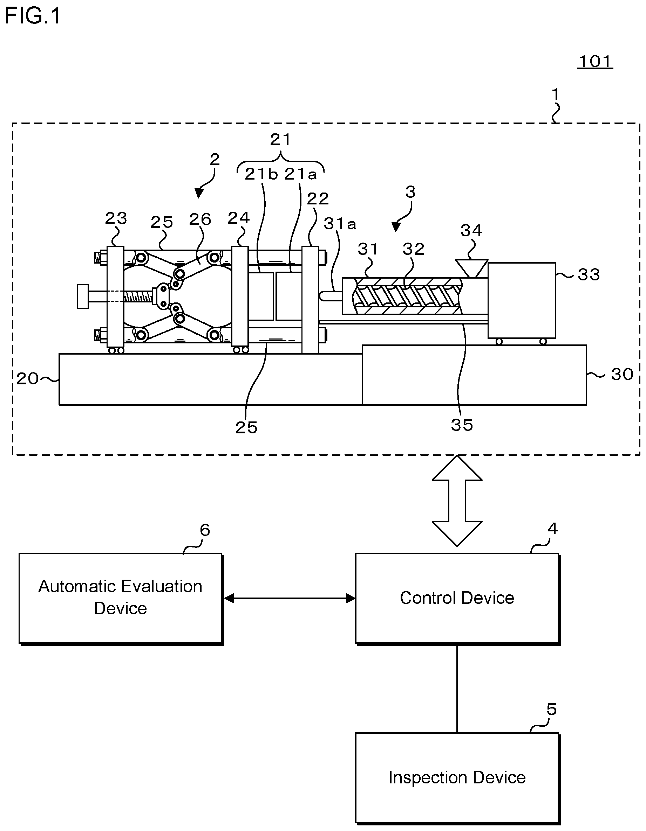

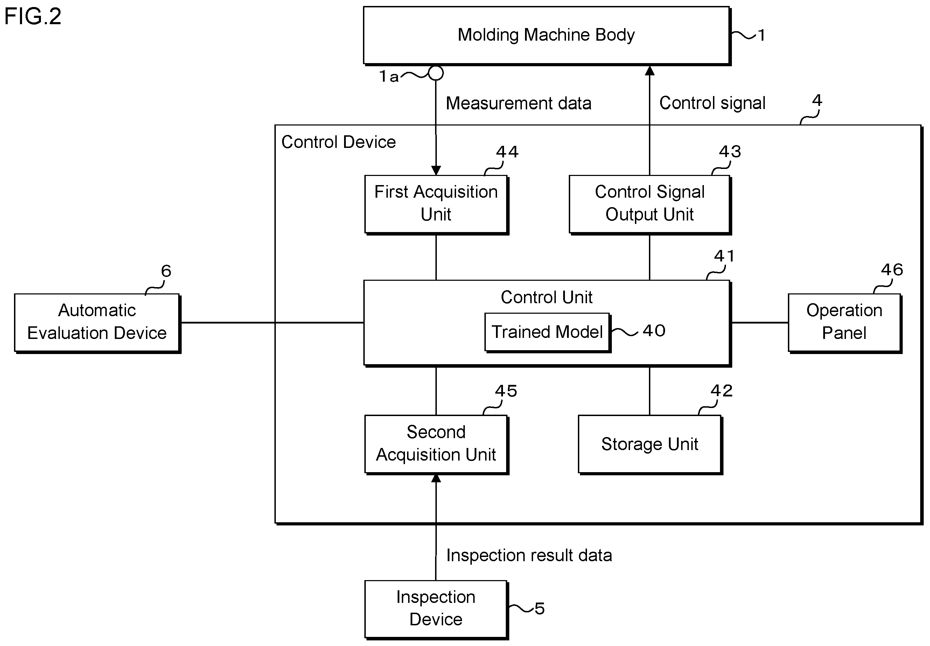

FIG. 1 is a schematic view depicting an example of the configuration of an injection molding machine 101 according to the present embodiment. The injection molding machine 101 according to the present embodiment is provided with a mold clamping device 2 for clamping a metal mold 21, an injection device 3 for plasticizing and injecting molding material, a control device 4 and an inspection device 5. The mold clamping device 2 and the injection device 3 constitute a molding machine body 1. The control device 4 functions as a molding condition modification device modifying molding conditions using a trained model 40 (FIG. 2) which will be described later. As illustrated in FIG. 1, the injection molding machine 101 is provided with an automatic evaluation device 6 according to the present embodiment. The automatic evaluation device 6 is a device for evaluating the trained model 40.

The mold clamping device 2 is provided with a fixed platen 22 fixed on a bed 20, a mold clamping housing 23 slidably provided over the bed 20 and a movable platen 24 that similarly slides over the bed 20. The fixed platen 22 and the mold clamping housing 23 are coupled with multiple, for example, four tie-bars 25, 25.... The movable platen 24 is configured to be slidable between the fixed platen 22 and the mold clamping housing 23. Between the mold clamping housing 23 and the movable platen 24, a mold clamping mechanism 26 is provided.

The mold clamping mechanism 26 is constructed by a toggle mechanism, for example. Note that the mold clamping mechanism 26 may be composed of a direct pressure mold clamping mechanism, that is, a mold clamping cylinder. The fixed platen 22 and the movable platen 24 are respectively provided with a fixed mold 21a and a movable mold 21b, and the metal mold 21 is configured to be opened and closed when the clamping mechanism 26 is driven.

The injection device 3 is provided on a base 30. The injection device 3 includes a heating cylinder 31 having a nozzle 31a at the tip and a screw 32 provided inside the heating cylinder 31 so as to be rotatably disposed in a circumferential direction and an axial direction. The screw 32 is driven in rotational and axial directions by a drive mechanism 33. The drive mechanism 33 is composed of a rotary motor for driving the screw 32 in the rotational direction, a motor for driving the screw 32 in the axial direction, and the like. Since the drive mechanism 33 illustrated in FIG. 1 is encased in a cover, the internal configuration thereof is not illustrated.

Near the rear of the heating cylinder 31, a hopper 34 for inputting molding materials is provided. The injection molding machine 101 is provided with a nozzle touch device 35 that moves the injection device 3 in the front-back direction (left-right direction in FIG. 1). When the nozzle touch device 35 is driven, the injection device 3 is configured to move forward so that the nozzle 31a of the heating cylinder 31 touches a contact portion of the fixed platen 22.

FIG. 2 is a block diagram depicting an example of the configuration of the control device 4 according to the present embodiment. The control device 4, which is a computer that controls the operation of the mold clamping device 2 and the injection device 3, is provided with a control unit 41, a storage unit 42, a control signal output unit 43, a first acquisition unit 44, a second acquisition unit 45 and an operation panel 46 as a hardware configuration. The control unit 41 has a trained model 40 as a functional part. The trained model 40 is a model that outputs a modification amount of a predetermined molding condition if molding conditions currently set and an inspection result (operating result) obtained by inspecting a state of a molded product are input. The trained model 40 may be a reinforcement learning model or a model obtained through supervised learning. The type and configuration of the trained model 40 are not particularly limited. Note that a part of the trained model 40 may be realized in hardware.

The control device 4 is a device for controlling the operation of the injection molding machine 101 (see FIG. 1) and modifying molding conditions thereof. Note that the control device 4 may be a server device connected to a network. Moreover, the control device 4 may be configured with multiple computers to perform distributed processing, may be realized by multiple virtual machines set up in a single server, or may be realized using a cloud server.

The control unit 41 includes an arithmetic processing circuit such as a CPU (Central Processing Unit), a multi-core CPU, a GPU (Graphics Processing Unit), a General-purpose computing on graphics processing units (GPGPU), a Tensor Processing Unit (TPU), an Application Specific Integrated Circuit (ASIC), an Field-Programmable Gate Array (FPGA) and an Neural Processing Unit (NPU) and the like, an internal storage device such as a ROM (Read Only Memory) and a RAM (Random Access Memory), an I/O terminal, a timer unit and the like. The control unit 41 executes molding condition modification processing by performing a control program (program product) stored in the storage unit 42 which will be described later. Note that each functional part of the control device 4 may be realized in software, or some or all of the functional parts thereof may be realized in hardware.

The storage unit 42 is a nonvolatile memory such as a hard disk, an EEPROM (Electrically Erasable Programmable ROM) or a flash memory. The storage unit 42 stores a control program for performing reinforcement learning on the molding condition modification method according to the state of the injection molding machine 101 and a molded product and for causing the computer to execute molding condition modification processing. The storage unit 42 stores various coefficients that characterize the trained model 40 as a reinforcement learning model.

The control signal output unit 43 outputs to the molding machine body 1 a control signal for controlling the operation of the injection molding machine 101 according to the control by the control unit 41 based on the molding conditions.

The operation panel 46 is an interface for setting the molding conditions or the like of the injection molding machine 101 and operating the action of the injection molding machine 101. The operation panel 46 is provided with a display panel and an operation device. The display panel, which is a display device such as a liquid crystal display panel, an organic EL display panel or the like, displays a reception screen to receive the settings of the molding conditions of the injection molding machine 101 according to the control by the control unit 41 and displays the state of the injection molding machine 101 and the implementation status of the molding condition modification method according to the present embodiment. The operation device, which is an input device for inputting and modifying the molding conditions of the injection molding machine 101, includes an operation button, a touch panel and the like. The operation device provides the control unit 41 with data indicating received molding conditions.

To the injection molding machine 101, setting values related to various molding conditions are set. The molding conditions include an injection start position, a mold temperature, a nozzle temperature, a cylinder temperature (heater temperature), a hopper temperature, a mold clamping force, an injection velocity, an injection acceleration, an injection peak pressure (injection pressure) and an injection stroke. The molding conditions further include a cylinder-tip resin pressure, a reverse flow preventive ring seating state, a holding pressure, a holding pressure switch-over velocity, a holding pressure switch-over position, a holding pressure completion position, a cushion position, a back pressure and a weighing torque. The molding conditions further include a weighing completion position, a screw retreat speed, a cycle time, a mold closing time, an injection time, a holding pressure time, a weighing time and a mold opening time. The molding conditions further include cooling time, the number of screw rotations, a mold opening and closing velocity, an ejection velocity and the number of ejections.

The injection molding machine 101 to which these setting values have been set, is operated according to these setting values. Among the above-described molding conditions, especially, the holding pressure, holding pressure switch-over position and injection velocity are highly associated with molding defects such as burrs and a short shot in a molded product. The present embodiment describes an example where a holding pressure [Mpa], a holding pressure switch-over position [mm] and an injection velocity [mm/sec] are modified.

The first acquisition unit 44 is an input circuit for acquiring measurement data obtained by measuring the state of the injection molding machine 101.

The mold clamping device 2 and the injection device 3 (see FIG. 1) are provided with one or more sensors 1a for detecting physical quantities that are information indicating the state of the injection molding machine 101 and are necessary to control the operation of the molding machine body 1. The sensor 1a is connected to the first acquisition unit 44. The physical quantities include, for example, voltage, current, temperature, humidity, torque, force such as pressure, as well as speed, acceleration, angle of rotation and position of a movable part, and the amount or rate of flow of a fluid. The sensor 1a includes, for example, a current sensor, a voltage sensor, a temperature sensor, a humidity sensor, a torque sensor, a pressure sensor, a speed sensor, an acceleration sensor, a rotation angle sensor, a positioning sensor, a flow sensor and a current meter. The sensor 1a outputs a measurement signal indicating a physical quantity to the control device 4. The measurement signal output from the sensor 1a is input to the first acquisition unit 44, and the first acquisition unit 44 acquires the measurement signal as measurement data.

The measurement data is data indicating an operational status of the injection molding machine 101 and includes, for example, a cycle time [seconds], an injection time [seconds], a holding pressure time [seconds], a holding pressure switch-over position [mm], a holding pressure switch-over velocity [mm/seconds], a holding pressure switch-over pressure [Pa], a cushion position [mm], a holding pressure switch-over completion position [mm], a weighing time [seconds], a back pressure [Pa] and a weighing completion position [mm].

The second acquisition unit 45 is an input circuit for acquiring inspection result data obtained by inspecting the state of a molded product molded by the injection molding machine 101. The inspection device 5 is connected to the second acquisition unit. The inspection device 5, which is a camera, a range sensor, a weight scale and the like for detecting the state of a molded product, measures physical quantities related to the state of a molded product and acquires inspection result data indicating a state of the molded product based on the physical quantity data obtained by measurement. The inspection result data is, for example, data indicating a burr area [mm²] and a short shot area [mm²] for a molded product.

The control device 4 is further connected to an automatic evaluation device 6. The automatic evaluation device 6 may be configured so as to be attachable to and detachable from the control device 4. When evaluating the trained model 40, the control unit 41 of the control device 4 executes processing related to evaluation of the trained model 40 in conjunction with the automatic evaluation device 6. More specifically, the control unit 41 executes processing of receiving information to induce a molding defect (defective molding condition and the number of tests to be described later) output from the automatic evaluation device 6 to be described later, changing molding conditions so that a molding defect is induced based on the received information, performing molding multiple times and transmitting inspection result data of molded products to the automatic evaluation device 6.

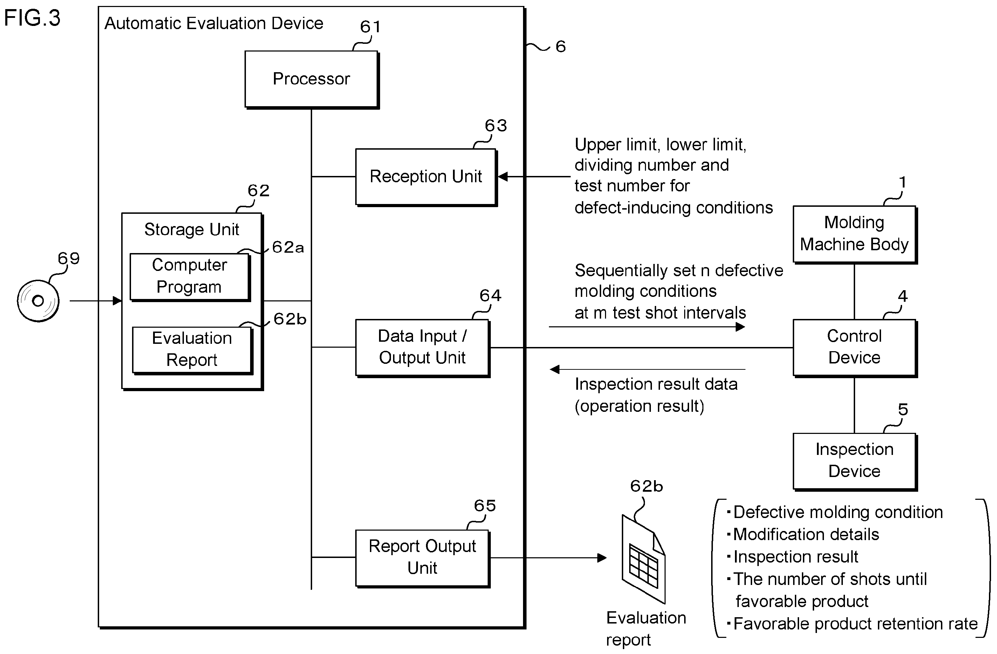

FIG. 3 is a block diagram depicting an example of the configuration of the automatic evaluation device 6 according to the present embodiment. The automatic evaluation device 6 is a computer that automatically conducts performance evaluation of the trained model 40 and is provided with a processor (processing unit) 61, a storage unit 62, a reception unit 63, a data input/output unit 64 and a report output unit 65 as a hardware configuration. The automatic evaluation device 6 may be a server device connected to a network. Moreover, the control device 4 and the automatic evaluation device 6 may be configured as a single computer. In other words, the control device 4 may be configured to perform the processing of the automatic evaluation device 6. In addition, the automatic evaluation device 6 may be configured with multiple computers to perform distributed processing, may be realized by multiple virtual machines set up in a single server, or may be realized using a cloud server.

The processor 61 includes an arithmetic processing circuit such as a CPU, a multi-core CPU, a GPU, a GP GPU, a TPU, an ASIC, an FPGA, an NPU and the like, an internal storage device such as ROM, a RAM and the like, an I/O terminal and a timer unit. The processor 61 executes a computer program (program product) 62a stored in the storage unit 62 to be described later to implement an automatic evaluation method according to the present embodiment. Note that each functional part of the automatic evaluation device 6 may be realized in software, or some or all of the functional parts thereof may be realized in hardware.

The storage unit 62 is a nonvolatile memory such as a hard disk, an EEPROM (Electrically Erasable Programmable ROM), a flash memory or the like. The storage unit 62 stores the computer program 62a for automatically executing performance evaluation of the trained model 40. The storage unit 62 further stores an evaluation report 62b, which is an evaluation result of the trained model 40.

The computer program 62a according to the present embodiment may be recorded on a recording medium 69 so as to be readable by the computer. The storage unit 62 stores the computer program 62a read from the recording medium 69 by a reader. The recording medium 69 is a semiconductor memory such as a flash memory. Furthermore, the recording medium 69 may be an optical disc such as a CD (Compact Disc)-ROM, a DVD (Digital Versatile Disc)-ROM, or a BD (Blu-ray (registered trademark) Disc). Moreover, the recording medium 69 may be a magnetic disk such as a flexible disk or a hard disk, or a magneto-optical disk.

In addition, the computer program 62a according to the present embodiment may be downloaded from an external server connected to a communication network and may be stored in the storage unit 62.

The reception unit 63 is an input device such as a keyboard, a touch panel, a mouse or the like. The reception unit 63 receives information for inducing a defective product occurrence behavior of the injection molding machine 101 in order to conduct performance evaluation of the trained model 40.

Specifically, the reception unit 63 receives an upper limit, a lower limit, a dividing number and the number of test shots (m times) for each of multiple defect-inducing conditions that induce defects of molded products among the operation conditions set to the molding machine body 1. The number of test shots is hereafter also referred to as a test number. The upper and lower limits are information to define a numerical range where a defect inducing condition may be changeable in order to induce a defect of a molded product. The dividing number is a number by which the numerical range is divided. The definition of the dividing number is not particularly limited if it corresponds to information for determining the number for each defect inducing condition created by dividing the numerical range.

The defect inducing conditions include, for example, a weighing completion position of molding material, an injection velocity switch-over position or a back pressure. By changing these conditions, the filling rate of molding material to the metal mold 21 can be increased or decreased.

The test number is the number of times test shots are made for each of the different defective molding conditions. The reception unit 63 provides the processor 61 with the upper and lower limits, the dividing number and the number of test shots for each of the weighing completion position, the first injection switch-over position, the second injection switch-over position and the back pressure.

The first injection switch-over position is a position where the injection velocity is switched for the first time after start of the injection. The second injection switch-over position is a position where the injection velocity is switched for the second time after the injection velocity is switched at the first injection switch-over position.

For example, in the case where the upper limit of the injection switch-over position is 60 [mm], the lower limit thereof is 40 [mm], and the dividing number n is equal to 20, the range of the setting value (60-40 [mm]) of the injection switch-over position can be divided by n in (60-40)/n. The setting values of the injection switch-over position obtained by dividing the range by n are 40, 41, 42, ... 60. The number of settings is (n + 1). The same applies to other defect inducing conditions.

The data input/output unit 64 is an input/output interface for inputting and outputting data to and from the control device 4. The input/output interface includes terminals through which data signals are input and output, a communication circuit and the like. The data input/output unit 64 is connected to the control device 4 via wired or wireless.

The processor 61 generates multiple (n) defective molding conditions based on the upper and lower limits and the dividing number for the defect inducing condition received by the reception unit 63. Specifically, by dividing the numerical range represented by the upper and lower limits of the defect inducing condition by the dividing number, the processor 61 obtains multiple setting values for the defect inducing condition. Likewise, the processor 61 obtains multiple setting values for another defect inducing condition. The processor 61 combines setting values of the multiple defect inducing conditions to generate multiple defective molding conditions. The processor 61 outputs the data indicating the generated defective molding conditions and the number of tests to the control device 4 through the data input/output unit 64. For example, the processor 61 sequentially outputs, to the control device 4, n defective molding conditions and n tests at m test shot intervals to set the defective molding condition. It may be possible that multiple (n) defective molding conditions and the number of tests may be output together to the control device 4.

The control device 4 sets the defective molding conditions output from the automatic evaluation device 6 to operate the molding machine body 1. Note that the defective molding condition corresponds to a part of the various molding conditions to be set. The control device 4 produces molded products by the number of tests received by the reception unit 63. Furthermore, the control device 4 modifies the molding condition using the trained model 40. Specifically, when injection molding is performed, the control device 4 acquires inspection result data obtained by inspecting the molded products with the inspection device 5, and inputs the molding condition currently set and the inspection result data to the trained model 40 to receive output of a modification amount of the molding condition. The control device 4 modifies the molding condition based on the modification amount output from the trained model 40. The control device 4 outputs the modification details of the molding condition performed for each of the test shots of the above-mentioned number of tests and the inspection results to the automatic evaluation device 6.

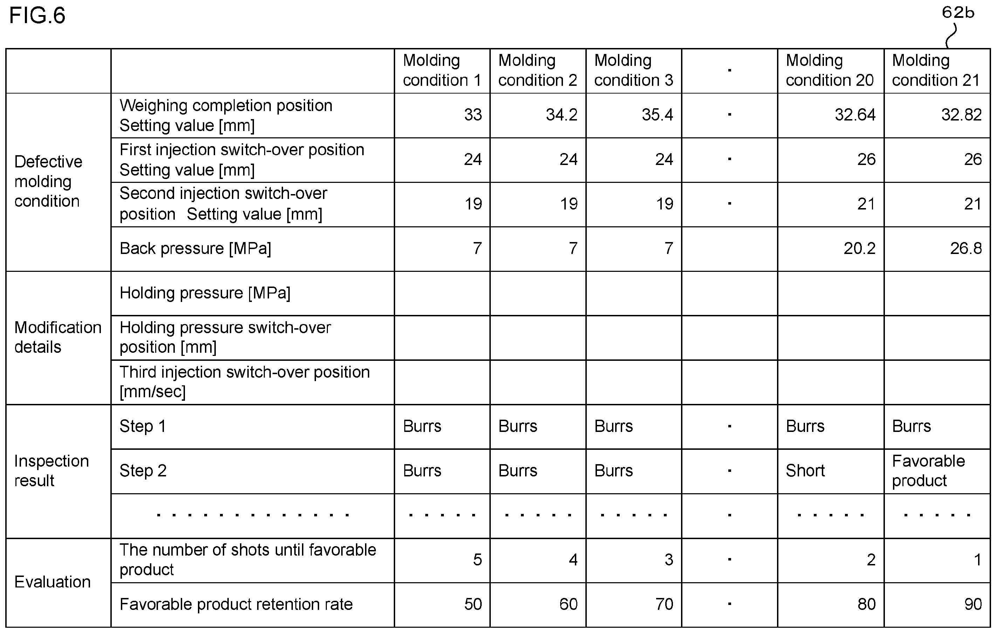

The processor 61 acquires the modification details and the inspection result data via the data input/output unit 64. The modification details include, for example, information related to the output from the trained model 40 such as a modification amount output from the trained model 40 or a molding condition modified by the modification amount or the like. The processor 61 generates an evaluation report 62b (see FIG. 6) of the trained model 40 based on the multiple defective molding conditions set in the control device 4 of the injection molding machine 101, the modification details of the molding conditions performed using the trained model 40, and the inspection results of molded products.

The report output unit 65 is an output device such as a display device and a printing device. The report output unit 65 outputs the evaluation report 62b generated by the processor 61 to the outside. Note that the report output unit 65 may be a communication circuit for transmitting the evaluation report 62b to an external terminal.

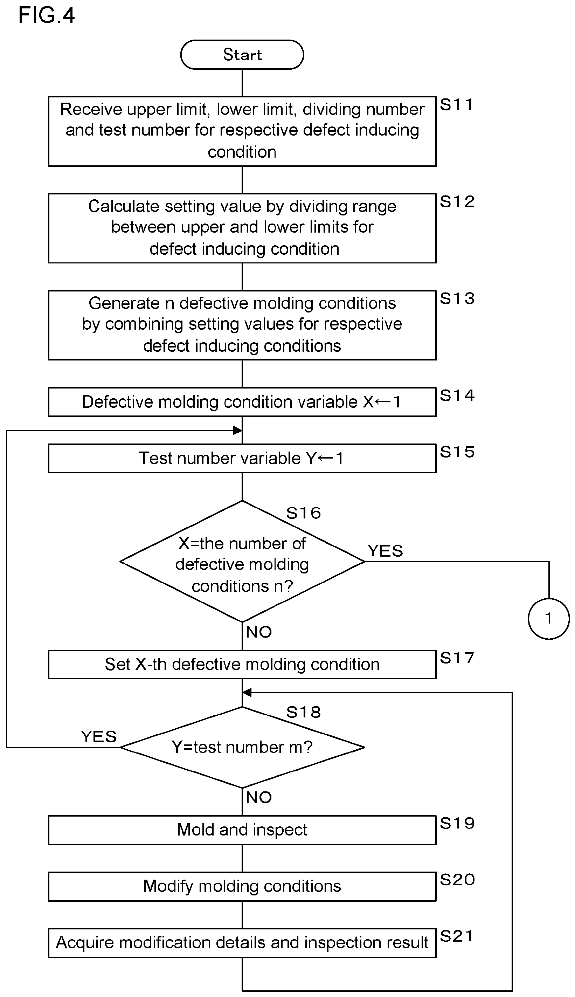

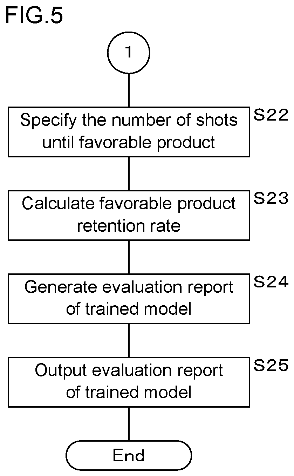

FIGs. 4 and 5 illustrate a flowchart depicting a processing procedure of an automatic evaluation method according to the present embodiment. The processor 61 receives upper and lower limits and a dividing number for each of the multiple defect inducing conditions as well as the number of tests performed for each of the defective molding conditions (step S11).

The processor 61 then divides the numerical range between the upper and lower limits by the dividing number for each of the multiple defect inducing conditions to calculate setting values for each of the defect inducing conditions (step S12). The processor 61 generates n defective molding conditions by combining the calculated setting values for the respective defect inducing conditions (step S13).

For example, the processor 61 can generate multiple defective molding conditions by sequentially changing the setting values of multiple defect inducing conditions in ascending or descending order according to the round robin scheduling. Specifically, the setting value for a first defect inducing condition selected from the multiple defect inducing conditions is changed by being sequentially added by a change width corresponding to the number of divisions from the lower limit to the upper limit to generate a defective molding condition. If the first defect inducing condition reaches the upper limit, the setting value for a second defect inducing condition is likewise changed. In the same manner, the setting value for each of the multiple defective molding conditions is sequentially changed to obtain multiple defective molding conditions.

It may also be possible that the setting value for a defect inducing condition is changed by being sequentially subtracted by a change width corresponding to the dividing number from the upper limit to the lower limit to generate a defective molding condition.

The round robin scheduling is an example, and multiple defective molding conditions may be generated by randomly changing each of the multiple defect inducing conditions within the numerical range between the upper and lower limits. Note that the redundant defective molding condition is excluded.

The processor 61 then initializes a defective molding condition variable X to 1 (step S14) and initializes a test number variable Y to 1 (step S15). The defective molding condition variable is a variable for identifying multiple defective molding conditions. The test number variable is a variable indicating the number of times the test shots were performed.

The processor 61 then determines whether or not the defective molding condition variable X is the number of defective molding conditions n generated at step S13 (step S16). That is, the processor 61 determines whether or not a test shot has been performed for all the defective molding conditions.

If determining that the defective molding condition variable X does not reach the number of defective molding conditions n (step S16: NO), the processor 61 sets the X-th defective molding condition in the control device 4 (step S17).

The processor 61 then determines whether or not the test number variable Y is the number of tests m received at step S11 (step S18). If determining that the test number variable Y is the number of tests m (step S18: YES), the processor 61 returns the processing to step S15. If determining that the test number variable Y does not reach the number of tests m (step S18: NO), the processor 61 operates the molding machine body 1 to produce a molded product and inspects the molded product (step S19).

Next, the control device 4 modifies molding conditions based on the inspection results of the molded products and the molding condition currently set (step S20). For example, the control device 4 uses the trained model 40 to modify the holding pressure, the holding pressure switch-over position and the third injection velocity.

The processor 61 then acquires the modification details of the molding condition and the inspection results from the control device 4 (step S21) and returns the processing to step S18.

By repeating the steps S15 to S21 as described above, test shots of m test times for each of the n defective molding conditions are performed to thereby collect the modification details of the molding conditions made with the trained model 40 and the inspection result data of molded products obtained through the modification.

If determining that the defective molding condition variable is the number of defective molding conditions n at step S16 (step S16: YES), the processor 61 specifies the number of shots performed until a favorable product is obtained after the defective molding conditions are set and molding of a defective product is started based on the acquired modification details and the inspection result data (step S22). The processor 61 calculates the number of shots for each of the multiple defective molding conditions.

The processor 61 further calculates a favorable product retention rate for molded products based on the acquired modification details and inspection result data (step S23). For example, the processor 61 calculates a favorable product retention rate by dividing the maximum number of times favorable products have been consecutively molded under a certain defective molding condition by the number of test. The processor 61 calculates the favorable product retention rate for each of the multiple defective molding conditions.

Next, the processor 61 generates the evaluation report 62b indicating the performance of the trained model 40 based on the generated defective molding conditions, the acquired modification details as well as inspection result data, the calculated favorable product retention rate and so on (step S24). The processor 61 outputs the generated evaluation report 62b via the report output unit 65 to the outside (step S25) and ends the processing.

FIG. 6 is a schematic view depicting an example of the evaluation report 62b according to the present embodiment. The evaluation report 62b is, for example, a table that depicts, in association with multiple molding conditions, set defective molding condition, modification details made with the trained model 40, inspection results of molded products and evaluation. Though FIG. 6 depicts 21 molding conditions, the number of defective molding conditions is one example.

More specifically, each row constituting the table of the evaluation report 62b displays the defective molding conditions, modification details, inspection results and evaluations. The defective molding conditions include the defect inducing conditions such as the weighing completion position, first injection switch-over position, second injection switch-over position, back pressure and the like. The modifications details include the holding pressure, holding pressure switch-over position and third injection switch-over position. The inspection results include the inspection result data for each molded product obtained when test shots are performed at the m-th time of tests. The evaluation includes the number of shots from generation of a defective product until a favorable product is obtained, and a favorable product retention rate.

Each column constituting the table of the evaluation report 62b, which corresponds to each of the multiple defective molding conditions, displays setting values of the above-mentioned defective molding conditions, a modification amount of each condition to be modified, inspection results of molded products, the number of shots before a favorable product is obtained and a favorable product retention rate.

The automatic evaluation device 6 according to the present embodiment thus configured can automatically conduct performance evaluation of the trained model 40 modifying the molding conditions of the injection molding machine 101 by merely setting conditions that induce a defective product occurrence behavior of the injection molding machine 101.

Furthermore, the automatic evaluation device 6 can externally output results of the performance evaluation as an evaluation report 62b as illustrated in FIG. 6. The operator of the injection molding machine 101 and the technician who installs and maintains the trained model 40 can check the performance of the trained model 40 by referring to the evaluation report 62b. The evaluation report 62b contains the defect inducing conditions, modification details of the molding conditions, inspection results of molded products and evaluations, which allows the operator and technician to evaluate and verify in details the performance of the trained model 40.

Moreover, the setting values of the multiple defect inducing conditions are changed in a round robin scheduling to facilitate generation of multiple defective molding conditions without redundancy.

In addition, the performance evaluation of the trained model 40 that modifies the molding conditions of the injection molding machine 101 can be conducted. Especially, the automatic evaluation device 6 according to the present embodiment can effectively conduct performance evaluation of the trained model 40 corresponding to a burr and a short shot.

In the present embodiment, though an example was described where the trained model 40 that modifies molding conditions for eliminating burrs and short shots in molded products based on a burr area and a short shot area as the inspection results, it may be possible to evaluate the trained model 40 that modifies the molding conditions based on the presence or absence of burrs and short shots in molded products. The evaluation report of the trained model 40 includes inspection result indicating the presence or absence of burrs and short shots in molded products.

In addition, it is possible to evaluate the trained model 40 that eliminates molding defects other than burrs and short shorts.

In the case where the trained model 40 that eliminates sink marks, weld lines, corrugated surfaces (flow marks) or crazing is evaluated, any of the following conditions may be used as a defect inducing condition: injection pressure, cylinder temperature, holding pressure, nozzle temperature, screw rotational velocity, injection velocity, back pressure or mold temperature.

The trained model 40 that eliminates sink marks is a model that outputs a modification amount for a predetermined molding condition if a molding condition and a sink mark area, a sink mark depth or the presence or absence of a sink mark obtained by inspecting the state of a molded product are input. The evaluation report for the trained model 40 includes inspection results indicating the sink mark area or sink mark depth in molded products or the presence or absence of sink marks in molded products.

The trained model 40 that eliminates weld lines is a model that outputs a modification amount for a predetermined molding condition if a molding condition and a weld line area or the presence or absence of weld lines obtained by inspecting the state of a molded product are input. The evaluation report for the trained model 40 includes inspection results indicating the weld line area or the presence or absence of weld lines in molded products.

The trained model 40 that eliminates flow marks is a model that outputs a modification amount for a predetermined molding condition if a molding condition and a flow mark area or the presence or absence of flow marks obtained by inspecting the state of a molded product are input. The evaluation report for the trained model 40 includes inspection results indicating a flow mark area or the presence or absence of flow marks in molded products.

The trained model 40 that eliminates crazing is a model that outputs a modification amount for a predetermined molding condition if a molding condition and a crazing area or the presence or absence of crazing obtained by inspecting the state of a molded product are input. The evaluation report for the trained model 40 includes inspection results indicating the crazing area or the presence or absence of crazing in molded products.

In the case where the trained model 40 that eliminates burns or vacuum voids and air pockets is evaluated, any of the following conditions may be used as a defect inducing condition: injection pressure, cylinder temperature, holding pressure, screw rotational velocity, injection velocity or back pressure.

The trained model 40 that eliminates burns in molded products is a model that outputs a modification amount for a predetermined molding condition if a molding condition and a burn area or the presence or absence of burns obtained by inspecting the state of a molded product are input. The evaluation report for the trained model 40 includes inspection results indicating the burn area or the presence or absence of burns in molded products.

The trained model 40 that eliminates vacuum voids and air pockets in molded products is a model that outputs a modification amount for a predetermined molding condition if a molding condition and the number of vacuum voids and air pockets obtained by inspecting the state of a molded product are input. The evaluation report for the trained model 40 includes inspection results indicating the number of vacuum voids and air pockets in molded products.

In the case where the trained model 40 that eliminates fogging or unevenness and spots on a surface in molded products is evaluated, any of the following conditions may be used as a defect inducing condition: cylinder temperature, nozzle temperature, screw rotational velocity, injection velocity, back pressure or mold temperature.

The trained model 40 that eliminates fogging on the surface of molded products is a model that outputs a modification amount for a predetermined molding condition if a molding condition and a fogging area or the presence or absence of fogging obtained by inspecting the state of a molded product are input. The evaluation report for the trained model 40 includes inspection results indicating the fogging area or the presence or absence of fogging in molded products.

The trained model 40 that eliminates unevenness in molded products is a model that outputs a modification amount for a predetermined molding condition if a molding condition and an unevenness area or the presence or absence of unevenness obtained by inspecting the state of a molded product are input. The evaluation report for the trained model 40 includes inspection results indicating the unevenness area or the presence or absence of unevenness in molded products.

The trained model 40 that eliminates spots on the surface of molded products is a model that outputs a modification amount for a predetermined molding condition if a molding condition and the number of spots obtained by inspecting the state of a molded product are input. The evaluation report for the trained model 40 includes inspection results indicating the number of spots in molded products.

In the case where the trained model 40 that eliminates surface dirt is evaluated, any of the following conditions may be used as a defect inducing condition: injection pressure, screw temperature, holding pressure, nozzle temperature, screw rotational velocity, injection velocity, back pressure or mold temperature.

The trained model 40 that eliminates dirt on the surface of molded products is a model that outputs a modification amount for a predetermined molding condition if a molding condition and an area of a dirty part or the presence or absence of dirt obtained by inspecting the state of a molded product are input. The evaluation report for the trained model 40 includes inspection results indicating the area of the dirty part or the presence or absence of dirt on molded products.

In the case where the trained model 40 that eliminates silver streaks is evaluated, for example, any of the following conditions may be used as a defect inducing condition: cylinder temperature, screw rotational velocity, injection velocity, back pressure or mold temperature.

The trained model 40 that eliminates silver streaks in molded products is a model that outputs a modification amount for a predetermined molding condition if a molding condition and the presence or absence of silver streaks obtained by inspecting the state of a molded product are input. The evaluation report for the trained model 40 includes inspection results indicating the presence or absence of silver streaks in molded products.

In the case where the trained model 40 that eliminates sprue defects is evaluated, for example, any of the following conditions may be used as a defect inducing condition: injection pressure, holding pressure or mold temperature.

The trained model 40 that eliminates sprue defects in molded products is a model that outputs a modification amount for a predetermined molding condition if a molding condition and the presence or absence of sprue defects obtained by inspecting the state of a molded product are input. The evaluation report for the trained model 40 includes inspection results indicating the presence or absence of sprue defects in molded products.

In the case where the trained model 40 that eliminates warping or bending is evaluated, for example, any of the following conditions may be used as a defect inducing condition: injection pressure, cylinder temperature, holding pressure, nozzle temperature, injection velocity, back pressure or mold temperature.

The trained model 40 that eliminates warping or bending in molded products is a model that outputs a modification amount for a predetermined molding condition if a molding condition and the presence or absence of warping or bending obtained by inspecting the state of a molded product are input. The evaluation report for the trained model 40 includes inspection results indicating the presence or absence of warping or bending in molded products.

In the case where the trained model 40 that eliminates cold slugs is evaluated, for example, any of the following conditions may be used as a defect inducing condition: cylinder temperature, nozzle temperature, screw rotational velocity, back pressure or mold temperature.

The trained model 40 that eliminates cold slugs in molded products is a model that outputs a modification amount for a predetermined molding condition if a molding condition and the presence or absence of cold slugs obtained by inspecting the state of a molded product are input. The evaluation report for the trained model 40 includes inspection results indicating the presence or absence of cold slugs in a molded product.

In the case where the trained model 40 that eliminates jetting is evaluated, for example, any of the following conditions may be used as a defect inducing condition: cylinder temperature, holding pressure, nozzle temperature, screw rotational velocity, injection velocity, back pressure or mold temperature. The trained model 40 that eliminates jetting in molded products is a model that outputs a modification amount for a predetermined molding condition if a molding condition and the presence or absence of jetting obtained by inspecting the state of a molded product are input. The evaluation report for the trained model 40 includes inspection results indicating the presence or absence of jetting in molded products.

In the present embodiment, though an example where performance evaluation of the trained model 40 for modifying the molding conditions of the injection molding machine 101 is conducted was described, the performance evaluation may also be conducted on a trained model for modifying the operating conditions of other industrial machines.

The means for solving the present disclosure is further described.

### Clause 1

An automatic evaluation device for a trained model modifying an operating condition of an industrial machine, comprising:
a reception unit that receives an upper limit, a lower limit and a dividing number for each of a plurality of defect inducing conditions inducing a defective product occurrence behavior; and
a processing unit, wherein
the processing unit
generates a plurality of defective conditions by combining values for each of the defect inducing conditions, the values being obtained based on an upper limit, a lower limit and a dividing number of each of the plurality of defect inducing conditions received by the reception unit, by dividing a numerical range between the upper limit and the lower limit by the dividing number,
setts the generated defective conditions to the industrial machine,
acquires an operation result obtained when the operating condition is modified by the trained model in a case where the industrial machine to which the defective conditions are set is operated, and
generates an evaluation report of the trained model based on operation results obtained by setting each of the plurality of defective conditions to the industrial machine and operating the industrial machine a plurality of times for each of the defective conditions.

### Clause 2

The automatic evaluation device according to clause 1, wherein the evaluation report includes the generated plurality of defective conditions, the operating condition modified by the trained model and the operation result obtained by operating the industrial machine a plurality of times for each of the defective conditions.

### Clause 3

The automatic evaluation device according to clause 1 or 2, wherein
the processing unit sequentially changes values of the plurality of defect inducing conditions in ascending or descending order with a round robin scheduling to generate a plurality of defective conditions.

### Clause 4

The automatic evaluation device according to any one of clauses 1 to 3, wherein the industrial machine is an injection molding machine.

### Clause 5

The automatic evaluation device according to clause 4, wherein the defect inducing condition includes a weighing completion position of a molding material or an injection velocity switch-over position and a back pressure.

### Clause 6

The automatic evaluation device according to clause 4 or 5, wherein an operating condition to be modified includes an injection velocity, an injection pressure, a heater temperature, a holding pressure, a holding pressure switch-over position, a mold temperature, a nozzle temperature, a mold clamping force, a back pressure, a holding pressure time or a screw rotation.

### Clause 7

The automatic evaluation device according to any one of clauses 4 to 6, wherein the operation result includes a presence or an absence of a defect for a molded product, quality of a molded product, and a type of the defect.

### Clause 8

The automatic evaluation device according to any one of clauses 4 to 7, wherein
the defect inducing condition includes a weighing completion position of a molding material, an injection velocity switch-over position and a back pressure,
the operating condition to be modified includes a holding pressure, a holding pressure switch-over position and an injection velocity, and
the operation result includes a presence or an absence of a burr and a short shot in a molded product or a burr area and a short shot area in a molded product.

### Clause 9

The automatic evaluation device according to any one of clauses 4 to 8, wherein
the defect inducing condition and the operating condition to be modified include any one of an injection pressure, a cylinder temperature, a holding pressure, a nozzle temperature, a screw rotational velocity, an injection velocity, a back pressure and a mold temperature, and
the operation result includes a sink mark area, a sink mark depth or a presence or an absence of sink mark in a molded product, a weld line area or a presence or an absence of a weld line in a molded product, a flow mark area or a presence or an absence of a flow mark in a molded product, or a crazing area or a presence or an absence of crazing in a molded product.

### Clause 10

The automatic evaluation device according to any one of clauses 4 to 9, wherein
the defect inducing condition and the operating condition to be modified include an injection pressure, a cylinder temperature, a holding pressure, a screw rotational velocity, an injection velocity or a back pressure, and
the operation result includes a burn area or a presence or absence of a burn area in a molded product, or the number of vacuum voids or air pockets in a molded product.

### Clause 11

The automatic evaluation device according to any one of clauses 4 to 10, wherein
the defect inducing condition and the operating condition to be modified include a cylinder temperature, a nozzle temperature, a screw rotational velocity, an injection velocity, a back pressure or a mold temperature, and
the operation result includes a fogging area or a presence or absence of fogging in a molded product, an unevenness area or a presence or an absence of unevenness in a molded product, or the number of spots in a molded product.

### Clause 12

The automatic evaluation device according to any one of clauses 4 to 11, wherein
the defect inducing condition and the operating condition to be modified include an injection pressure, a screw temperature, a holding pressure, a nozzle temperature, a screw rotational velocity, an injection velocity, a back pressure or a mold temperature, and
the operation result includes a dirt part area or a presence or an absence of dirt in a molded product.

### Clause 13

The automatic evaluation device according to any one of clauses 4 to 12, wherein
the defect inducing condition and the operating condition to be modified include a cylinder temperature, a screw rotational velocity, an injection velocity, a back pressure or a mold temperature, and
the operation result includes a presence or an absence of silver streaks in a molded product.

### Clause 14

The automatic evaluation device according to any one of clauses 4 to 13, wherein
the defect inducing condition and the operating condition to be modified include an injection pressure, a holding pressure or a mold temperature, and
the operation result includes a presence or absence of a sprue defect in a molded product.

### Clause 15

The automatic evaluation device according to any one of clauses 4 to 14, wherein
the defect inducing condition and the operating condition to be modified include an injection pressure, a cylinder temperature, a holding pressure, a nozzle temperature, an injection velocity, a back pressure or a mold temperature, and
the operation result includes a presence or an absence of warping or bending in a molded product.

### Clause 16

The automatic evaluation device according to any one of clauses 4 to 15, wherein
the defect inducing condition and the operating condition to be modified include a cylinder temperature, a nozzle temperature, a screw rotational velocity, a back pressure or a mold temperature, and
the operation result includes a presence or an absence of a cold slug in a molded product.

### Clause 17

The automatic evaluation device according to any one of clauses 4 to 16, wherein
the defect inducing condition and the operating condition to be modified include a cylinder temperature, a holding pressure, a nozzle temperature, a screw rotational velocity, an injection velocity, a back pressure or a mold temperature, and
the operation result includes a presence or an absence of jetting in a molded product.

### Reference Signs List

- 1: molding machine body
- 1a: sensor
- 2: clamping device
- 3: injection device
- 4: control device
- 5: inspection device
- 6: automatic evaluation device
- 40: trained model
- 61: processor
- 62: storage unit
- 62a: computer program
- 62b: evaluation report
- 63: reception unit
- 64: data input/output unit
- 65: report output unit
- 69: recording medium
- 101: injection molding machine

## Claims

1. An automatic evaluation device for a trained model modifying an operating condition of an industrial machine, comprising:
a reception unit that receives an upper limit, a lower limit and a dividing number for each of a plurality of defect inducing conditions inducing a defective product occurrence behavior; and
a processing unit, wherein
the processing unit
generates a plurality of defective conditions by combining values for each of the defect inducing conditions, the values being obtained based on an upper limit, a lower limit and a dividing number of each of the plurality of defect inducing conditions received by the reception unit, by dividing a numerical range between the upper limit and the lower limit by the dividing number,
setts the generated defective conditions to the industrial machine,
acquires an operation result obtained when the operating condition is modified by the trained model in a case where the industrial machine to which the defective conditions are set is operated, and
generates an evaluation report of the trained model based on operation results obtained by setting each of the plurality of defective conditions to the industrial machine and operating the industrial machine a plurality of times for each of the defective conditions.

2. The automatic evaluation device according to claim 1, wherein the evaluation report includes the generated plurality of defective conditions, the operating condition modified by the trained model and the operation result obtained by operating the industrial machine a plurality of times for each of the defective conditions.

3. The automatic evaluation device according to claim 1 or 2, wherein
the processing unit sequentially changes values of the plurality of defect inducing conditions in ascending or descending order with a round robin scheduling to generate a plurality of defective conditions.

4. The automatic evaluation device according to any one of claims 1 to 3, wherein the industrial machine is an injection molding machine.

5. The automatic evaluation device according to claim 4, wherein the defect inducing condition includes a weighing completion position of a molding material or an injection velocity switch-over position and a back pressure.

6. The automatic evaluation device according to claim 4 or 5, wherein an operating condition to be modified includes an injection velocity, an injection pressure, a heater temperature, a holding pressure, a holding pressure switch-over position, a mold temperature, a nozzle temperature, a mold clamping force, a back pressure, a holding pressure time or a screw rotation.

7. The automatic evaluation device according to any one of claims 4 to 6, wherein the operation result includes a presence or an absence of a defect for a molded product, quality of a molded product, and a type of the defect.

8. The automatic evaluation device according to any one of claims 4 to 7, wherein
the defect inducing condition includes a weighing completion position of a molding material, an injection velocity switch-over position and a back pressure,
the operating condition to be modified includes a holding pressure, a holding pressure switch-over position and an injection velocity, and
the operation result includes a presence or an absence of a burr and a short shot in a molded product or a burr area and a short shot area in a molded product.

9. The automatic evaluation device according to any one of claim 4 to 8, wherein
the defect inducing condition and the operating condition to be modified include any one of an injection pressure, a cylinder temperature, a holding pressure, a nozzle temperature, a screw rotational velocity, an injection velocity, a back pressure and a mold temperature, and
the operation result includes a sink mark area, a sink mark depth or a presence or an absence of sink mark in a molded product, a weld line area or a presence or an absence of a weld line in a molded product, a flow mark area or a presence or an absence of a flow mark in a molded product, or a crazing area or a presence or an absence of crazing in a molded product.

10. The automatic evaluation device according to any one of claims 4 to 9, wherein
the defect inducing condition and the operating condition to be modified include an injection pressure, a cylinder temperature, a holding pressure, a screw rotational velocity, an injection velocity or a back pressure, and
the operation result includes a burn area or a presence or absence of a burn area in a molded product, or the number of vacuum voids or air pockets in a molded product.

11. The automatic evaluation device according to any one of claims 4 to 10, wherein
the defect inducing condition and the operating condition to be modified include a cylinder temperature, a nozzle temperature, a screw rotational velocity, an injection velocity, a back pressure or a mold temperature, and
the operation result includes a fogging area or a presence or absence of fogging in a molded product, an unevenness area or a presence or an absence of unevenness in a molded product, or the number of spots in a molded product.

12. The automatic evaluation device according to any one of claims 4 to 11, wherein
the defect inducing condition and the operating condition to be modified include an injection pressure, a screw temperature, a holding pressure, a nozzle temperature, a screw rotational velocity, an injection velocity, a back pressure or a mold temperature, and
the operation result includes a dirt part area or a presence or an absence of dirt in a molded product.

13. The automatic evaluation device according to any one of claims 4 to 12, wherein
the defect inducing condition and the operating condition to be modified include a cylinder temperature, a screw rotational velocity, an injection velocity, a back pressure or a mold temperature, and
the operation result includes a presence or an absence of silver streaks in a molded product.

14. The automatic evaluation device according to any one of claims 4 to 13, wherein
the defect inducing condition and the operating condition to be modified include an injection pressure, a holding pressure or a mold temperature, and
the operation result includes a presence or absence of a sprue defect in a molded product.

15. The automatic evaluation device according to any one of claims 4 to 14, wherein
the defect inducing condition and the operating condition to be modified include an injection pressure, a cylinder temperature, a holding pressure, a nozzle temperature, an injection velocity, a back pressure or a mold temperature, and
the operation result includes a presence or an absence of warping or bending in a molded product.

16. The automatic evaluation device according to any one of claims 4 to 15, wherein
the defect inducing condition and the operating condition to be modified include a cylinder temperature, a nozzle temperature, a screw rotational velocity, a back pressure or a mold temperature, and
the operation result includes a presence or an absence of a cold slug in a molded product.

17. The automatic evaluation device according to any one of claims 4 to 16, wherein
the defect inducing condition and the operating condition to be modified include a cylinder temperature, a holding pressure, a nozzle temperature, a screw rotational velocity, an injection velocity, a back pressure or a mold temperature, and
the operation result includes a presence or an absence of jetting in a molded product.

18. An automatic evaluation method for a trained model modifying an operating condition of an industrial machine, comprising:
receiving an upper limit, a lower limit and a dividing number for each of a plurality of defect inducing conditions inducing a defective product occurrence behavior;
generating a plurality of defective conditions by combining values for each of the defect inducing conditions, the values being obtained based on an upper limit, a lower limit and a dividing number of each of the plurality of defect inducing conditions received, by dividing a numerical range between the upper limit and the lower limit by the dividing number;
setting the generated defective conditions to the industrial machine;
acquiring an operation result when the operating condition is modified by the trained model in a case where the industrial machine to which the defective conditions are set is operated; and
generating an evaluation report of the trained model based on operation results obtained by setting each of the plurality of defective conditions to the industrial machine and operating the industrial machine a plurality of times for each of the defective conditions.

19. A computer program causing a computer to evaluate a trained model modifying an operating condition of an industrial machine, comprising:
receiving an upper limit, a lower limit and a dividing number for each of a plurality of defect inducing conditions inducing a defective product occurrence behavior;
generating a plurality of defective conditions by combining values for each of the defect inducing conditions, the values being obtained based on an upper limit, a lower limit and a dividing number of each of the plurality of defect inducing conditions received, by dividing a numerical range between the upper limit and the lower limit by the dividing number;
setting the generated defective conditions to the industrial machine;
acquiring an operation result when the operating condition is modified by the trained model in a case where the industrial machine to which the defective conditions are set is operated; and
generating an evaluation report of the trained model based on operation results obtained by setting each of the plurality of defective conditions to the industrial machine and operating the industrial machine a plurality of times for each of the defective conditions.
